# EUROPÄISCHE PATENTSCHRIFT

(11) **EP 4 411 695 B1**
(45) Veröffentlichungstag und Bekanntmachung des Hinweises auf die Patenterteilung: **21.01.2026**
(21) Anmeldenummer: 24154201.8
(22) Anmeldetag: 26.01.2024
(51) Int. Cl.: G09B 9/28, G09B 9/16, B64C 13/04, B64D 31/04, B64D 43/00, B64D 10/00, G09B 9/46, B25J 9/00, G06F 3/01

(54) **COCKPIT MIT VIRTUELLEN STEUERELEMENTEN**
COCKPIT HAVING VIRTUAL CONTROLS
POSTE DE PILOTAGE AVEC DES ÉLÉMENTS DE COMMANDE VIRTUELS

(30) Priorität: 01.02.2023 DE 102023102428
(43) Veröffentlichungstag der Anmeldung: 07.08.2024
(73) Patentinhaber: Deutsches Zentrum für Luft- und Raumfahrt e.V., 53227 Bonn (DE)
(72) Erfinder: Rüdinger, Ina, 85077 Manching (DE)
(74) Vertreter: Rösler Rasch van der Heide & Partner

(56) Entgegenhaltungen:
- DE-A1- 102015 103 735
- RU-C1- 2 738 489
- US-A1- 2015 025 547
- US-A1- 2019 258 239
- US-A1- 2020 365 050

## Beschreibung

Die Erfindung betrifft ein System zur Cockpit-Bedienung, sowie ein Luftfahrzeug mit einem solchen System.

Cockpits für Luftfahrzeuge, Drohnen-Bodenstationen und von Simulatoren stellen die Mensch-Maschine-Schnittstelle zwischen Bediener und der Maschine dar. In der bemannten Flugführung stehen typischerweise einem Bediener Bedienelemente zum Steuern von Subsystemen seines Luftfahrzeugs zur Verfügung. Solche Bedienelemente betreffen die Kommunikation, die Navigation, Lichter, und je nach Luftfahrzeugtyp Weiteres. Zur Flugsteuerung selbst, d. h. um einen Flugzeugzustand mit Komponenten für die Momentendynamik (Rollbewegung, Nickbewegung, Gierbewegung) und Komponenten für translationale Beschleunigungen und Geschwindigkeiten zu beeinflussen, stehen je nach Konfiguration des Fluggeräts entsprechende Steuerelemente zur Verfügung. Während solche Steuerelemente in Flächenflugzeugen typischerweise einen Steuerknüppel zum Einsteuern von Nick- und Rollbewegungen, sowie einen oder mehrere Schubhebel zum Einstellen einer gewünschten Schubhebelstellung korrelierend mit einem gewünschten Schub des oder der Flugmotoren des Flugzeugs, sowie Pedale zum Einsteuern eines Moments um die Hochachse des Flugzeugs umfassen, weisen Drehflügelflugzeuge typischerweise statt oder zusätzlich zum Schubhebel einen Kollektivhebel auf, um den kollektiven Blatt-Verstellwinkel von einstellbaren Rotorblättern bei gleicher oder annähernd gleicher Drehzahl des Rotors verändern zu können - dies entspricht der grundsätzlichen Steuerlogik eines konventionellen Hubschraubers.

Spezielle Konfigurationen von bemannten Luftfahrzeugen weisen häufig Eigenheiten hinsichtlich ihrer Freiheitsgrade in Schub und aerodynamischen Steuerflächen auf, was sich in den Ausführungen der Steuerelemente im Cockpit des bemannten Luftfahrzeugs widerspiegeln kann. So können Hubschrauber mit Tandemrotor zwei kollektive Stellhebel aufweisen, auch werden im Stand der Technik für verschiedene Konfigurationen und den damit verbundenen Einsatzzwecken der Luftfahrzeuge unterschiedliche Ausführungen der Bedienelemente angeboten. Übliche Ausführungen sind Steuerhörner, Centersticks oder Sidesticks.

Aber auch die eingangs erwähnten Bedienelemente sind in einer großen Vielfalt je nach Konfiguration und Typ des bemannten Luftfahrzeugs erhältlich. Während in historischen Luftfahrzeugen ausschließlich analoge Instrumente (Anzeigen) und mechanische Schalter und Knöpfe verbaut wurden, kommen in modernen Luftfahrzeugen zunehmend digitale Anzeigen zum Einsatz, welche zumindest teilweise auch die Funktion von Bedienelementen übernehmen können, indem sie als Touchscreens ausgeführt werden.

Während insbesondere in der kommerziellen Verkehrsluftfahrt zur Reduktion der Kosten und zur Erhöhung der Einsatzbereitschaft der Piloten über Luftfahrzeuge einer Flotte mit verschiedenen Typen hinweg Wert auf Kommunalität beim Cockpit-Design seitens der Hersteller gelegt wird, sind Piloten generell immer noch mit einer Vielzahl verschiedener Cockpit-Layouts beim Wechsel von Luftfahrzeugtypen konfrontiert. Während gegenwärtig bekanntermaßen wie in den meisten anderen Industriezweigen auch es in der Luftfahrt zu zunehmender Digitalisierung kommt (in der Luftfahrt insbesondere bezüglich analoger Instrumente), sind die Steuerelemente zur Steuerung des Luftfahrzeugs wie eingangs erläutert weiterhin typischerweise physisch ausgeführt.

Das für Linkshänder typische Problem, mit Steuerelementen konfrontiert zu werden, die prinzipiell für Rechtshänder ausgelegt wurden, ist dabei auch in der Luftfahrt vorhanden. Diese Problematiken tauchen nicht nur in bemannten Luftfahrzeugen auf, sondern auch bei unbemannten Luftfahrzeugen, bei denen Bodenkontrollstationen so ausgelegt sind, dass beispielsweise der Systembediener eine Hand für die Bedienung der Nutzlast (z.B. Kamera) zur Verfügung hat, die andere zum Schreiben. Aus Kostengründen hinsichtlich der Hardwareauslegung sind die Bodenkontrollstationen für Drohnen häufig identisch ausgelegt, unabhängig von der Händigkeit aber auch der Aufgabe (Drohnenführung, Systembediener).

Die US 2020/365050 A1 betrifft ein System zur Simulation von Pilotsteuerungen, umfassend: Einen oder mehrere computergesteuerte Arme, die so angeordnet sind, dass sie in einer Cockpitumgebung montiert sind, und die eine Vielzahl von Bewegungsbereichen und Trajektorien ermölgichen und so konfiguriert sind, dass sie ein Steuerelement zur Betätigung durch einen Piloten aufnehmen.

Die US 2015/025547 A1 betrifft ferner ein lokales chirurgisches Cockpit umfassend eine örtliche Operationskonsole, die für die Übertragung chirurgischer Bewegungen eines Bedieners, der die örtliche Operationskonsole bedient, zu einer entfernten Operationsstelle konfiguriert ist, und umfassend ein lokales chirurgisches Instrument mit lokalen Eingabefingern, die konfiguriert sind, um Eingaben an entsprechende entfernte chirurgische Finger zu liefern.

Die RU 2 738 489 C1 betrifft außerdem einen Trainingssimulator und einen Simulationskomplex zur Vorbereitung von Kosmonauten, aufweisend unter anderem Virtual-Reality-Handschuhe mit taktiler Rückmeldung und einen Virtual-Reality-Helm.

Die US 2019/258239 A1 betrifft weiterhin ein System zur Interaktion mit einem entfernten Objekt, das eine tragbare Jacke für einen Benutzer, zwei Aktuatoren zum Stützen der Arme des Benutzers, Motoren zum Bewirken von Bewegungen des Rumpfs und/oder der Arme des Benutzers, Sensoren zum Messen einer auf den Benutzer ausgeübten Kraft und/oder einer Position des Benutzers sowie eine Steuer- und Datenübertragungsvorrichtung zur Kommunikation mit dem entfernten Objekt umfasst.

Die DE 10 2015 103 735 A1 betrifft schließlich ein Verfahren zum Testen wenigstens eines in Luftfahrzeugen zu bedienenden Geräts mittels einer Virtual-Reality-Umgebung, wobei das wenigstens eine zu testende Gerät einer Testperson virtuell dargestellt wird, und eine Interaktion zwischen der Testperson und dem wenigstens einen Gerät mittels oder in der Virtual-Reality-Umgebung aufgenommen wird.

Es ist Aufgabe der Erfindung, ein Cockpit flexibler zu gestalten, insbesondere ein Cockpit bereitzustellen, welches für eine größere Anzahl von verschiedenen Körpergrößen von Bedienern sowie Erfahrungen von Bedienern geeignet ist, insbesondere auch vor dem Hintergrund der Berücksichtigung von Anthropometrien aller Geschlechter, welche insbesondere im engen Kampfflugzeugcockpit eine besondere Herausforderung darstellt.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft ein System für eine Cockpit-Bedienung eines Cockpits eines Luftfahrzeugs durch einen Bediener, aufweisend eine Recheneinheit, eine Virtualisierungseinheit, und zwei Exoskelettarme mit jeweils einer Vielzahl von kinematischen Freiheitsgraden und zum Aufnehmen und Ablegen der Bedienerarme, wobei die Exoskelettarme Aktoren aufweisen, um den Bediener gegen auftretende Beschleunigungen im Luftfahrtzeug zu unterstützen, wobei die Recheneinheit dazu ausgeführt ist, abhängig von der jeweils aktuellen Stellung der Exoskelettarme gewünschte Stellungen virtueller Steuerelemente des Cockpits zu ermitteln und die Virtualisierungseinheit zum Anzeigen der virtuellen Steuerelemente in ihren gewünschten Stellungen dem Bediener anzuzeigen, sowie Informationen über die jeweils aktuelle Stellung der Exoskelettarme und/oder über die gewünschten Stellungen der virtuellen Steuerelemente an einen Flugrechner zum Zwecke der Flugregelung zu übertragen.

Der erste Aspekt der Erfindung ist insbesondere so zu verstehen, dass die Recheneinheit grundsätzlich dazu ausgeführt ist, abhängig von der jeweils ermittelten Stellung der jeweiligen Exoskelettarme die Stellungen der virtuellen Steuerelemente virtuell einzustellen und somit die Bedienung physisch vorhandener Steuerelemente im traditionellen Cockpit zu emulieren, um in beiden Fällen (physisch vorhandene Steuerelemente sowie erfindungsgemäße Nutzung der Exoskelettarme für die Bedienung virtueller Steuerelemente) entsprechende Kommandos für insbesondere einen Flugrechner zur Verfügung stellen zu können. Dies bedeutet jedoch nicht, dass zu allen Zeitpunkten und somit mit jeder Bewegung der Arme des Bedieners und den mitgeführten Exoskelettarmen auch eine Verstellung der virtuellen Steuerelemente erfolgen muss. Der Bediener ist bevorzugt darüber hinaus in der Lage, zumindest eine Hand von einem der virtuellen Steuerelemente zu lösen, und damit virtuelle Bedienelemente im Cockpit ebenfalls zu bedienen, beispielsweise den Fahrwerkshebel, Knöpfe und Schalter für Navigation, Icons auf einem virtuellen Touchscreen, etc.;

Die Stellungen der virtuellen Steuerelemente des Cockpits korrespondieren abhängig von der Art der Steuerelemente mit entsprechenden Flugsteuer-Kommandos. Ist das Steuerelement ein Schubhebel, ist dessen Stellung eine Schubhebelstellung. Ist das Steuerelement ein Steuerknüppel, ist dessen Stellung eine Auslenkung aus einer neutralen Lage und gibt typischerweise Wunsch-Lagewinkel des Luftfahrzeugs vor, häufiger jedoch gewünschte Drehraten des Luftfahrzeugs.

Der Begriff des Cockpits umfasst nicht nur das erfindungsgemäß typischerweise im Bereich einer Luftfahrzeugfront angeordnete Kabinenteil für den Bediener wie den Piloten, Copiloten oder einen weiteren Bediener im Cockpit wie den sogenannten "Backseater", z.B. Beispiel den Waffensystemoffizier, sondern, nicht unter den Schutzumfang der Ansprüche fallend, auch Cockpits für ferngesteuerte Luftfahrzeuge einer Drohnen-Bodenstation, die für einen Drohnenpiloten und/oder einen Systembediener vorgesehen sind - ein solcher Systembediener kann beispielsweise über einen Joystick Nutzlasten wie Kameras bedienen. Ein Cockpit eines (Flug-)Simulators ist mit dem Begriff des Cockpits nicht gemeint.

Sofern nicht ausschließlich ein HOTAS Konzept ("HOTAS" ist Abkürzung für "Hands on Throttle and Stick") vorgesehen wird, sondern auch zusätzlich zu den virtuellen Steuerelementen virtuelle Bedienelemente ähnlich zu einem traditionellen physisch vorhandenen Cockpit mit einer Vielzahl von Schaltern und Knöpfen in der Virtualisierung für den Bediener angezeigt werden, ist daher zweckmäßig ein Mechanismus vorzusehen, der die jeweilige aktuelle Stellung des jeweiligen Exoskelettarms nicht zu allen Zeitpunkten auf einen Wunsch der Verstellung der aktuellen Stellung eines jeweiligen der virtuellen Steuerelemente umrechnet, sondern auch das virtuelle Analogon zum Lösen einer Hand von einem physischen Steuerelement berücksichtigt. Dies kann beispielsweise dadurch umgesetzt werden, dass an einem jeweiligen distalen Ende eines Exoskelettarms ein physisch vorhandener Griff vorgesehen wird, der sensorisch erkennt, ob die jeweilige Hand des Bedieners diesen gerade umgreift. So kann das intuitiv ausgeführte Umgreifen eines Steuerelements durch den Bediener nachgebildet werden. Lässt der Bediener dieses physische Element los, kann auch im virtuellen Cockpit davon ausgegangen werden, dass der Bediener seine Hand vom Steuerelement lösen möchte, um beispielsweise diese auszuruhen oder um ein virtuelles Bedienelement, welches ebenfalls rein virtuell mittels der Virtualisierung dem Bediener angezeigt werden kann, zu bedienen.

In anderen Worten werden gemäß dem ersten Aspekt der Erfindung physische Steuerelemente eines Cockpits ersetzt durch die Kombination der Recheneinheit, der Virtualisierungseinheit und der Exoskelettarme, welche wie folgt zusammenwirken: Indem der Bediener seine Arme bewegt, welche in den Exoskelettarmen aufgenommen werden, kann er Steuerelemente bedienen, welche ausschließlich virtuell durch die Virtualisierungseinheit ihm angezeigt werden. Dies erfolgt beispielsweise über ein Helmvisier mit entsprechender Anzeigefähigkeit oder anderen holographischen Methoden oder Ähnliches. Die Arme des Bedieners werden dabei in den Exoskelettarmen aufgenommen, und bevorzugt mittels Positionssensoren in den Exoskelettarmen ist es der Recheneinheit möglich, die Bewegung der Arme des Bedieners zu jedem Zeitpunkt zu ermitteln. Somit kann der Bediener in gewohnten Bewegungen die virtuell dargestellten Steuerelemente bedienen, als wären physische Steuerelemente im Cockpit vorhanden. Das gleiche gilt für Bedienelemente, welche ebenfalls virtuell dargestellt werden können.

Im Ergebnis wird somit an der Schnittstelle der Erzeugung der Kommandos, die von physischen Steuerelementen ausgegeben werden, zwar die Art der Vorgabe der Bediener-Kommandos in ihrer technischen Umsetzung geändert; es spielt jedoch für die Zwecke der Flugregelung in einem Flugrechner keine Rolle, ob vorderhalb dieser Schnittstelle die Kommandos neuartig erzeugt werden. Denn in beiden Fällen (physische Steuerelemente und virtuelle Steuerelemente) werden Kommandosignale erzeugt, welche in einem sogenannten Fly-By-Wire System ohnehin ohne mechanische Verbindungen zu den aerodynamischen Steuerflächen und zu den Triebwerksteuerungen eines Luftfahrzeugs lediglich informationstechnisch übertragen werden, nicht aber durch Kraft, Hydraulikdruck, Seilzug oder Ähnliches. Vielmehr kommandiert der Bediener typischerweise mittels seiner Eingaben an den Steuerelementen (unabhängig davon, ob physische Steuerelemente oder erfindungsgemäße virtuelle Steuerelemente verwendet werden) Vorgabe-Signale für insbesondere den Flugrechner, welcher regelungstechnisch die Kommandos entsprechend umsetzt. Für nicht unter den Schutzumfang der Ansprüche fallende Simulationen oder Drohnen-Bodenstationen gilt das Gesagte mutatis mutandis.

Es ist eine vorteilhafte Wirkung der Erfindung, dass die Notwendigkeit der Bereitstellung physischer Steuerelemente wie Steuerknüppel bzw. Sidestick und Schubhebel entfällt. Dies führt zu einigen sekundären Vorteilen, beispielsweise dass Gewicht eingespart wird, und Änderungen am Cockpit leicht durchführbar sind, da lediglich per Software die virtuellen Steuerelemente und gegebenenfalls virtuellen Bedienelemente geändert werden müssen, um eine veränderte Darstellung durch die Virtualisierungseinheit zu erreichen. Dementsprechend kann mit hoher Flexibilität für einen Bediener eine gewohnte Cockpit-Umgebung auch in einem fremden Luftfahrzeug dargestellt werden, ferner können individuelle Eigenschaften des Bedieners besser berücksichtigt werden, beispielsweise Größenunterschiede bei anthropometrischen Parametern (z.B. Längen der Gliedmaßen, Größe der Hände, Sitzhöhe der Person), Linkshänder oder Rechtshänder, und Ähnliches. Es kann somit in zivilen Flotten wie auch in militärischen Flotten über verschiedene Luftfahrzeugtypen durch die Bereitstellung des virtuellen Cockpits eine Kommunalisierung erreicht werden, wie sie in physischen Cockpits unterschiedlicher Luftfahrzeugtypen kaum erreichbar ist. Ferner ermöglicht die Verwendung der Exoskelettarme das Abstützen der Arme, sodass eine Ermüdung der Arme des Bediener auch in hochagilen Luftfahrzeugen mit hohen Lastvielfachen länger vermieden werden kann. Das Exoskelett mit den beiden Exoskelettarmen ermöglicht das Gefühl, den Arm während des Steuerns des Luftfahrzeugs auf dem virtuellen Steuerelement abstützen zu können oder sogar ablegen zu können, wenn eine solche Unterstützung vorgesehen wird. Werden außerdem Aktoren an den Exoskelettarmen vorgesehen, kann eine spürbare Rückmeldung für den Bediener erzeugt werden. Zudem kann durch die Flexibilität einer softwarebasierten virtuellen Lösung eine einfachere Vereinheitlichung der Cockpits und somit eine einfachere Konversion zwischen unterschiedlichen Flugzeugmustern erreicht werden.

Gemäß einer vorteilhaften Ausführungsform weisen die Exoskelettarme für ihre Freiheitsgrade jeweilige Positionssensoren zur Ermittlung und Übertragung an die Recheneinheit eines jeweiligen aktuellen Wertes für jeden der kinematischen Freiheitsgrade auf, wobei die Recheneinheit dazu ausgeführt ist, mittels der Werte für die Freiheitsgrade eine Position eines jeweiligen im Bereich des jeweiligen distalen Endes der Exoskelettarme vorgegebenen Referenzpunkts in Relation zum Cockpit zu ermitteln, und die Virtualisierungseinheit zum Anzeigen virtueller Steuerelemente des Cockpits umfassend ein Steuerelement zum manuellen Steuern der Momentendynamik des Luftfahrzeugs und ein Steuerelement zum manuellen Einstellen einer Schubhebelstellung für den Bediener so anzusteuern, dass eine aktuelle Stellung des Steuerelements zum manuellen Einstellen der Schubhebelstellung mit der Position des vorgegebenen Referenzpunktes eines Exoskelettarms korreliert und dass eine aktuelle Stellung des Steuerelements zum manuellen Steuern der Momentendynamik mit der Position des vorgegebenen Referenzpunktes am anderen Exoskelettarm korreliert, und wobei die Recheneinheit dazu ausgeführt ist, an einen Flugrechner zum Zwecke der Flugregelung die jeweilige aktuell gewünschte Stellung der virtuellen Steuerelemente oder die jeweilige Position der Referenzpunkte zu übertragen.

Dementsprechend wird ein System zur Cockpit-Bedienung eines Luftfahrzeugs durch einen Bediener bereitgestellt, aufweisend eine Recheneinheit, eine Virtualisierungseinheit, und zwei Exoskelettarme mit jeweils einer Vielzahl von kinematischen Freiheitsgraden und mit jeweiligen Positionssensoren zur Ermittlung und Übertragung an die Recheneinheit eines jeweiligen aktuellen Wertes für jeden der kinematischen Freiheitsgrade, wobei die Recheneinheit dazu ausgeführt ist, mittels der Werte für die Freiheitsgrade eine Position eines jeweiligen im Bereich des jeweiligen distalen Endes der Exoskelettarme vorgegebenen Referenzpunkts in Relation zum Cockpit zu ermitteln, und die Virtualisierungseinheit zum Anzeigen virtueller Steuerelemente des Cockpits umfassend ein Steuerelement zum manuellen Steuern der Momentendynamik des Luftfahrzeugs und ein Steuerelement zum manuellen Einstellen einer Schubhebelstellung für den Bediener so anzusteuern, dass eine aktuelle Stellung des Steuerelements zum manuellen Einstellen der Schubhebelstellung mit der Position des vorgegebenen Referenzpunktes eines Exoskelettarms korreliert und dass eine aktuelle Stellung des Steuerelements zum manuellen Steuern der Momentendynamik mit der Position des vorgegebenen Referenzpunktes am anderen Exoskelettarm korreliert, sowie Informationen über die jeweilige aktuelle Stellung der virtuellen Steuerelemente oder über die Positionen der Referenzpunkte als Kommandosignale an einen Flugrechner zum Zwecke der Flugregelung zu übertragen.

Alternativ zur Berechnung der jeweiligen aktuellen gewünschten Stellung der virtuellen Steuerelemente mittels der Position des jeweiligen Referenzpunkts an den Exoskelettarmen können andere geometrische Abbildungen verwendet werden, die jedoch im Endergebnis die gleiche Wirkung aufweisen, wie die Benutzung eines explizit vorgegebenen Referenzpunktes. Es ist daher nicht notwendig, den Referenzpunkt explizit vorzugeben, dieser kann auch implizit vorgegeben sein und zu allen Zeitpunkten berechenbar sein, sodass stets eine Transformation von der aktuellen Pose der Exoskelettarme auf eine aktuelle gewünschte Stellung des jeweils zugehörigen der virtuellen Steuerelemente möglich ist, sofern entsprechende Bedingungen erfüllt sind, die angeben, dass der Bediener das jeweilige der Steuerelemente auch bedienen möchte, anstelle seine Hände von den virtuellen Steuerelementen zu nehmen, um beispielsweise ein virtuelles Bedienelement zu bedienen.

In anderen Worten ist die Recheneinheit dazu ausgeführt, mittels der Werte für die Freiheitsgrade des jeweiligen der Exoskelettarme eine jeweilige Pose der Exoskelettarme zu ermitteln, und abhängig von der jeweiligen ermittelten Pose der Exoskelettarme eine gewünschte jeweilige Stellung der virtuellen Steuerelemente zu ermitteln, und diese ermittelte gewünschte Stellung mittels der Virtualisierungseinheit auf die virtuellen Steuerelemente zu übertragen und diese entsprechend dem Bediener anzuzeigen, sowie Informationen über die jeweilige aktuelle Stellung der virtuellen Steuerelemente oder über die Positionen der Referenzpunkte als Kommandosignale an einen Flugrechner zum Zwecke der Flugregelung zu übertragen.

Alternativ zu den Positionssensoren in den Exoskelettarm kann äquivalent dazu auch ein Tracking der Exoskelettarme durch eine Tracking-Einheit im Cockpit erfolgen, beispielsweise mittels eines optischen Trackings, entsprechenden reflektierenden Markern am jeweiligen Exoskelettarm und entsprechenden Kameras, oder Ähnlichem, um eine Pose des jeweiligen Exoskelettarms zu ermitteln, oder alternativ lediglich den Referenzpunkt am jeweiligen distalen Ende des jeweiligen Exoskelettarms, ohne somit die Haltung des Ellenbogens zu berücksichtigen.

Gemäß einer vorteilhaften Ausführungsform ist die Recheneinheit dazu ausgeführt, die Positionen der Referenzpunkte relativ zum Cockpit daraufhin zu überwachen, ob sie sich aus zumindest einem vorgegebenen Bereich jeweils um die virtuell dargestellten Steuerelemente entfernen, sodass der Bediener durch Führen seiner Hand und Mitführen des jeweiligen Exoskelettarms virtuelle dargestellte Bedienelemente zum Ansteuern von Subsystemen des Luftfahrzeugs bedienen kann und dasjenige der virtuell dargestellten Steuerelemente in seiner aktuellen Stellung verbleibt, wenn der Bediener seinen in einem der Exoskelettarme aufgenommenen Arm auf ein durch die Virtualisierungseinheit virtuell dargestelltes Bedienelement des Cockpits mit vorgegebenen Raumkoordinaten relativ zum Cockpit hin bewegt.

Gemäß einer weiteren vorteilhaften Ausführungsform weist das System weiterhin zwei Handschuhe für den Bediener auf, wobei die zwei Handschuhe jeweils zum Ausgeben von haptischem und/oder taktilem Feedback ausgeführt sind, wobei die zwei Handschuhe mit der Recheneinheit datentechnisch verbunden sind und die Recheneinheit dazu ausgeführt ist, beim Bedienen eines der virtuell dargestellten Bedienelemente durch den Bediener denjenigen Handschuh mit der virtuell bedienenden Hand des Bedieners zum Ausgeben eines haptischen und/oder taktilen Feedbacks anzusteuern. Alternativ kann der jeweilige Exoskelettarm um die Funktion der Handschuhe erweitert werden, so dass es sich um eine Einheit handelt.

Das haptische bzw. das taktile Feedback ermöglicht, dass der Bediener das Gefühl bekommt, ein physisch vorhandenes Bedienelement zu berühren, obwohl diese nur virtuell existieren und ihm dargestellt werden. So kann das Gefühl beim Umlegen eines Schalters nachgebildet werden, das Gefühl beim Drücken eines Knopfes, oder das Drücken eines Feldes auf einem Touchscreen. Auch kann ein abstraktere Rückmeldung erzeugt werden, beispielsweise wenn als holographische Elemente dargestellte Bedienelemente verschoben werden, sodass nicht beim Bediener der Eindruck entsteht, virtuelle Analoga von physischen Bedienelemente zu bedienen, sondern tatsächliche holographische Elemente, wobei auch in diesem Fall ein entsprechendes Feedback an den Fingern des Bedieners die Bedienung erleichtert.

Gemäß einer weiteren vorteilhaften Ausführungsform weist jeder der Exoskelettarme Aktoren auf, welche mit der Recheneinheit datentechnisch verbunden sind, wobei die Recheneinheit dazu ausgeführt ist, die Aktoren so anzusteuern, dass jeder der Exoskelettarme beim Verschieben der jeweiligen Stellung eines jeweiligen der virtuell dargestellten Steuerelemente durch den Bediener einen künstlichen Widerstand erzeugt.

Dieser künstliche Widerstand ist dem natürlichen Widerstand eines physischen Steuerelements nachgebildet, der in jedem Luftfahrzeug vorhanden sein muss, um nicht durch Vibrationen und anderer Beschleunigungen des Luftfahrzeugs selbst entsprechende Steuereingaben hervorzurufen. Durch die Nachbildung des für physische Steuerelemente zu erwartenden auftretenden Widerstands mittels des künstlichen Widerstandes erhält der Bediener ein vertrautes Gefühl bei der Bedienung der virtuellen Steuerelemente.

Gemäß einer weiteren vorteilhaften Ausführungsform weist das System weiterhin eine Eingabeeinheit auf, die mit der Recheneinheit datentechnisch verbunden ist, wobei die Recheneinheit dazu ausgeführt ist, abhängig von der Eingabe an der Eingabeeinheit die Steuerelemente in ihrer virtuellen Darstellung entsprechend relativ zum Cockpit virtuell zu positionieren und kinematische Eigenschaften vorzugeben, gemäß denen die Aktoren der Exoskelettarme zum Erzeugen des künstlichen Widerstands von der Recheneinheit angesteuert werden.

Die Eingabeeinheit ermöglicht es, vor dem Flug (oder in einer alternativen Ausführungsform auch während des Fluges des Luftfahrzeugs) die Position der Lagerung der virtuellen Steuerelemente im virtuellen Cockpit einzustellen. Diese Position der virtuellen Steuerelemente ist maßgeblich dafür, ob für einen Bediener ein ergonomisches Cockpit vorliegt, d. h. der relative Abstand zwischen Bedienersitz und Position der Steuerelemente an die Länge seiner Gliedmaßen angepasst ist.

Gemäß einer weiteren vorteilhaften Ausführungsform ist die Eingabeeinheit dazu ausgeführt, eine explizite Auswahl für Linkshänder-Anordnung und Rechtshänder-Anordnung der Steuerelemente vorzugeben und wobei die Recheneinheit dazu ausgeführt ist, abhängig von der Eingabe an der Eingabeeinheit und von der aktuellen Darstellung der virtuellen Steuerelemente entsprechend der Auswahl des Anwenders die Positionen der virtuellen Steuerelemente relativ zum Cockpit gegenüber einer Längsachse des Luftfahrzeugs zu spiegeln oder beizubehalten.

Gemäß einer weiteren vorteilhaften Ausführungsform ist die Recheneinheit dazu ausgeführt, die Aktoren des jeweiligen Exoskelettarms so anzusteuern, dass entlang von vorgegebenen Freiheitsgraden eines jeweiligen virtuellen Steuerelements der Bediener einen Widerstand erfährt, welcher während des Fluges innerhalb vorgegebener Grenzen abhängig vom Flugzeugzustand oder in Reaktion einer Eingabe des Bedieners veränderlich ist.

Gemäß einer weiteren vorteilhaften Ausführungsform umfasst die Virtualisierungseinheit ein Helmdisplay für den Bediener.

Ein weiterer Aspekt der Erfindung betrifft ein Luftfahrzeug mit einem System wie oben und im Folgenden beschrieben.

Gemäß einer weiteren vorteilhaften Ausführungsform sind die Exoskelettarme jeweils auf Schulterhöhe hinter einem Bedienersitz an der Luftfahrzeugstruktur gelagert.

Vorteile und bevorzugte Weiterbildungen des vorgeschlagenen Luftfahrzeugs ergeben sich durch eine analoge und sinngemäße Übertragung der im Zusammenhang mit dem vorgeschlagenen System vorstehend gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1:: Ein System zur Cockpit-Bedienung eines Luftfahrzeugs gemäß einem Ausführungsbeispiel der Erfindung.
- Fig. 2:: Ein Luftfahrzeug mit einem System nach Fig. 1 gemäß einem Ausführungsbeispiel der Erfindung.

Die Darstellungen in den Figuren sind schematisch und nicht maßstäblich.

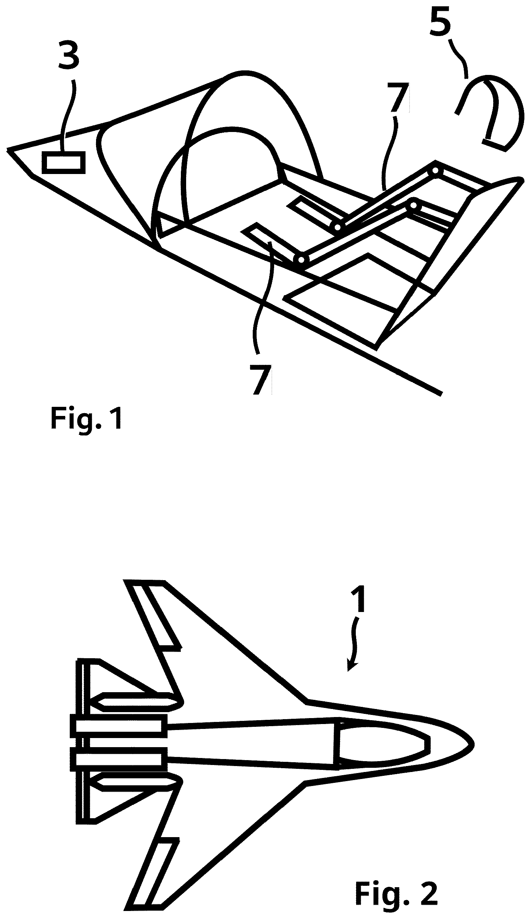

Fig. 1 zeigt ein System zur Cockpit-Bedienung eines einsitzigen Kampfflugzeugs 1 als Luftfahrtzeug durch einen Bediener in der Funktion eines Piloten. Gezeigt ist ein Cockpit des Luftfahrzeugs 1 der Fig. 2, mit Hauptflugrichtung nach links oben in der Zeichenebene der Fig. 1. Weiter rechts unten in der Zeichnung ist der Pilotensitz dargestellt. Das System zur Cockpit-Bedienung weist dabei Folgendes auf: Eine Recheneinheit 3, eine Virtualisierungseinheit 5, und zwei Exoskelettarme 7 mit jeweils einer Vielzahl von kinematischen Freiheitsgraden und mit jeweiligen Positionssensoren zur Ermittlung und Übertragung an die Recheneinheit 3 eines jeweiligen aktuellen Wertes für jeden der kinematischen Freiheitsgrade. Die Positionssensoren sind Winkelsensoren, die die Gelenkwinkel zwischen den Segmenten des jeweiligen Exoskelettarms 7 erfassen.

Diese Gelenkwinkel werden durch die natürliche Bewegung des Piloten mit seinen Armen manuell eingestellt, wobei Aktoren vorgesehen werden können, um den Piloten bei dieser gewünschten Bewegung gegen auftretende Beschleunigungen wie in engen Kurvenflügen mit hohen Geschwindigkeiten zu unterstützen. Es ist somit für die Recheneinheit 3 zu jedem Zeitpunkt eine jeweilige Pose des jeweiligen Exoskelettarms 7 bekannt. Der jeweilige Exoskelettarm 7 ist auf Schulterhöhe hinter dem Piloten an der Luftfahrzeugstruktur gelagert und weist Schultergelenke und Ellbogengelenke zur Darstellung von Freiheitsgraden auf, die analog zu den Freiheitsgraden der menschlichen Schulter und des menschlichen Ellenbogens ausgeführt sind, sodass für den im Exoskelettarm 7 aufgenommenen Arm des Piloten sämtliche durch seine Freiheitsgrade in Schulter und Ellenbogen möglichen Bewegungen durch den Exoskelettarm 7 ebenfalls möglich sind. Die Recheneinheit 3 nutzt diese Werte für die Freiheitsgrade zur Posenbestimmung und damit eines Referenzpunktes am jeweiligen Exoskelettarm 7 in Relation zum Cockpit, um gewünschte Stellungen eines virtuellen Steuerknüppels und eines virtuellen Schubhebels zu ermitteln. Die Virtualisierungseinheit 5 zeigt diese virtuellen Steuerelemente des Cockpits (virtueller Steuerknüppel und virtueller Schubhebel) dem Piloten über sein Helmvisier, an und aktualisiert in jedem weiteren Zeitschritt die ermittelte gewünschte Stellung des virtuellen Steuerknüppels und des virtuellen Schubhebels. Außerdem übermittelt die Recheneinheit 3 diese gewünschten Stellungen des virtuellen Steuerknüppels und des virtuellen Schubhebels als Kommandosignale an einen Flugrechner zum Zwecke der Flugregelung. Während die Arme des Piloten in einem jeweiligen der Exoskelettarme 7 kontinuierlich aufgenommen sind, will der Pilot jedoch nicht kontinuierlich mit jeder Bewegung eine Stellung des virtuellen Schubhebels oder des virtuellen Steuerknüppel verändern. Dies wird von der Recheneinheit 3 durch eine entsprechende Handhaltung erkannt, indem Griff-Sensoren am jeweiligen Ende des Exoskelettarms 7 angeordnet sind, welche erfassen, ob eine entsprechende Lösebewegung der jeweiligen Hand des Piloten analog zu einer Lösebewegung von physischen Steuerknüppeln und Schubhebeln erfolgt oder nicht. Löst der Pilot zumindest eine Hand von einem dieser virtuellen Steuerelemente, so wird davon ausgegangen, dass er dieses Steuerelement aktuell nicht bedienen möchte und dessen Stellung verändern möchte, sondern beispielsweise eines der ebenfalls virtuell dargestellten Bedienelemente bedienen möchte, wie einen holographischen Touchscreen oder virtuelle Schalter und Knöpfe. Auch bei der Bedienung der virtuellen Bedienelemente bleibt dabei der jeweilige Exoskelettarm 7 an dem jeweiligen Pilotenarm umschlossen. Ferner sind zwei Handschuhe für den Piloten vorgesehen, wobei die zwei Handschuhe jeweils zum Ausgeben von haptischem und/oder taktilem Feedback ausgeführt sind, wobei die zwei Handschuhe mit der Recheneinheit 3 datentechnisch verbunden sind und die Recheneinheit 3 beim Bedienen eines der virtuell dargestellten Bedienelemente durch den Piloten denjenigen Handschuh mit der virtuell bedienenden Hand des Piloten zum Ausgeben eines haptischen und/oder taktilen Feedbacks ansteuert. Der natürlich zu erwartende Widerstand gegen eine Veränderung der jeweiligen Stellung der virtuellen Bedienelemente wird durch Aktoren am jeweiligen Exoskelettarm 7 im Bereich der Gelenke analog zu einem robotischen Manipulator erzeugt.

Fig. 2 zeigt das Luftfahrzeug 1 mit dem System nach Fig. 1 aus einer Oberansicht.

Obwohl die Erfindung im Detail durch bevorzugte Ausführungsbeispiele näher illustriert und erläutert wurde, ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehende Erläuterungen in der Beschreibung, definiert wird.

### Bezugszeichenliste

- 1: Luftfahrzeug
- 3: Recheneinheit
- 5: Virtualisierungseinheit
- 7: Exoskelettarme

## Patentansprüche

1. System für eine Cockpit-Bedienung eines Cockpits eines Luftfahrzeugs durch einen Bediener, aufweisend eine Recheneinheit (3), eine Virtualisierungseinheit (5), und zwei Exoskelettarme (7) mit jeweils einer Vielzahl von kinematischen Freiheitsgraden und zum Aufnehmen und Ablegen der Bedienerarme, wobei die Exoskelettarme (7) Aktoren aufweisen, um den Bediener gegen auftretende Beschleunigungen im Luftfahrtzeug zu unterstützen, wobei die Recheneinheit (3) dazu ausgeführt ist, abhängig von der jeweils aktuellen Stellung der Exoskelettarme (7) gewünschte Stellungen virtueller Steuerelemente des Cockpits zu ermitteln und die Virtualisierungseinheit (5) zum Anzeigen der virtuellen Steuerelemente in ihren gewünschten Stellungen dem Bediener anzuzeigen, sowie Informationen über die jeweils aktuelle Stellung der Exoskelettarme (7) und/oder über die gewünschten Stellungen der virtuellen Steuerelemente an einen Flugrechner zum Zwecke der Flugregelung zu übertragen.

2. System nach Anspruch 1,
wobei die Exoskelettarme (7) jeweilige Positionssensoren zur Ermittlung und Übertragung an die Recheneinheit (3) eines jeweiligen aktuellen Wertes für jeden ihrer kinematischen Freiheitsgrade aufweisen, wobei die Recheneinheit (3) dazu ausgeführt ist, mittels der Werte für die Freiheitsgrade eine Position eines jeweiligen im Bereich des jeweiligen distalen Endes der Exoskelettarme (7) vorgegebenen Referenzpunkts in Relation zum Cockpit zu ermitteln, und die Virtualisierungseinheit (5) zum Anzeigen virtueller Steuerelemente des Cockpits umfassend ein Steuerelement zum manuellen Steuern der Momentendynamik eines dem Cockpit zugehörigen realen oder simulierten Luftfahrzeugs (1) und ein Steuerelement zum manuellen Einstellen einer Schubhebelstellung für den Bediener so anzusteuern, dass eine aktuelle Stellung des Steuerelements zum manuellen Einstellen der Schubhebelstellung mit der Position des vorgegebenen Referenzpunktes eines Exoskelettarms (7) korreliert und dass eine aktuelle Stellung des Steuerelements zum manuellen Steuern der Momentendynamik mit der Position des vorgegebenen Referenzpunktes am anderen Exoskelettarm (7) korreliert, und wobei die Recheneinheit (3) dazu ausgeführt ist, an einen Flugrechner zum Zwecke der Flugregelung die jeweilige aktuell gewünschte Stellung der virtuellen Steuerelemente oder die jeweilige Position der Referenzpunkte zu übertragen.

3. System nach Anspruch 2,
wobei die Recheneinheit (3) dazu ausgeführt ist, die Positionen der Referenzpunkte relativ zum Cockpit daraufhin zu überwachen, ob sie sich aus zumindest einem vorgegebenen Bereich jeweils um die virtuell dargestellten Steuerelemente entfernen, sodass der Bediener durch Führen seiner Hand und Mitführen des jeweiligen Exoskelettarms (7) virtuelle dargestellte Bedienelemente zum Ansteuern von Subsystemen des Luftfahrzeugs (1) bedienen kann und dasjenige der virtuell dargestellten Steuerelemente in seiner aktuellen Stellung verbleibt, wenn der Bediener seinen in einem der Exoskelettarme (7) aufgenommenen Arm auf ein durch die Virtualisierungseinheit (5) virtuell dargestelltes Bedienelement des Cockpits mit vorgegebenen Raumkoordinaten relativ zum Cockpit hin bewegt.

4. System nach einem der vorhergehenden Ansprüche,
weiterhin aufweisend zwei Handschuhe für den Bediener, wobei die zwei Handschuhe jeweils zum Ausgeben von haptischem und/oder taktilem Feedback ausgeführt sind, wobei die zwei Handschuhe mit der Recheneinheit (3) datentechnisch verbunden sind und die Recheneinheit (3) dazu ausgeführt ist, beim Bedienen eines der virtuell dargestellten Bedienelemente durch den Bediener denjenigen Handschuh mit der virtuell bedienenden Hand des Bediener zum Ausgeben eines haptischen und/oder taktilen Feedbacks anzusteuern.

5. System nach einem der vorhergehenden Ansprüche,
wobei jeder der Exoskelettarme (7) Aktoren aufweist, welche mit der Recheneinheit (3) datentechnisch verbunden sind, wobei die Recheneinheit (3) dazu ausgeführt ist, die Aktoren so anzusteuern, dass jeder der Exoskelettarme (7) beim Verschieben der jeweiligen Stellung eines jeweiligen der virtuell dargestellten Steuerelemente durch den Bediener einen künstlichen Widerstand erzeugt.

6. System nach Anspruch 5,
weiterhin aufweisend eine Eingabeeinheit, die mit der Recheneinheit (3) datentechnisch verbunden ist, wobei die Recheneinheit (3) dazu ausgeführt ist, abhängig von der Eingabe an der Eingabeeinheit die Steuerelemente als Ganzes in ihrer virtuellen Darstellung entsprechend relativ zum Cockpit virtuell zu positionieren und kinematische Eigenschaften vorzugeben, gemäß denen die Aktoren der Exoskelettarme (7) zum Erzeugen des künstlichen Widerstands von der Recheneinheit (3) angesteuert werden.

7. System nach Anspruch 6,
wobei die Eingabeeinheit dazu ausgeführt ist, eine explizite Auswahl für Linkshänder-Anordnung und Rechtshänder-Anordnung der Steuerelemente vorzugeben und wobei die Recheneinheit (3) dazu ausgeführt ist, abhängig von der Eingabe an der Eingabeeinheit und von der aktuellen Darstellung der virtuellen Steuerelemente entsprechend der Auswahl des Anwenders die Positionen der virtuellen Steuerelemente relativ zum Cockpit gegenüber einer Längsachse des Luftfahrzeugs (1) zu spiegeln oder beizubehalten.

8. System nach einem der Ansprüche 5 bis 7,
wobei die Recheneinheit (3) dazu ausgeführt ist, die Aktoren des jeweiligen Exoskelettarms (7) so anzusteuern, dass entlang von vorgegebenen Freiheitsgraden eines jeweiligen virtuellen Steuerelements der Bediener einen Widerstand erfährt, welcher während des Fluges innerhalb vorgegebener Grenzen abhängig vom Flugzeugzustand oder in Reaktion einer Eingabe des Bediener veränderlich ist.

9. Luftfahrzeug (1) mit einem System nach einem der vorhergehenden Ansprüche.

10. Luftfahrzeug (1) nach Anspruch 9,
wobei die Exoskelettarme (7) jeweils auf Schulterhöhe hinter einem Bedienersitz an der Luftfahrzeugstruktur gelagert sind.

## Claims

1. A system for cockpit operation of a cockpit of an aircraft by an operator, comprising a computing unit (3), a virtualisation unit (5), and two exoskeleton arms (7) each with a plurality of kinematic degrees of freedom and for lifting up and laying down the operator arms, wherein the exoskeleton arms (7) comprise actuators in order to assist the operator against occurring accelerations in the aircraft, wherein the computing unit (3) is designed to determine, depending on the current position of the exoskeleton arms (7), desired positions of virtual cockpit control elements and to display the virtualisation unit (5) for displaying the virtual control elements in their desired positions to the operator, and to transmit information on the current position of the exoskeleton arms (7) and/or on the desired positions of the virtual control elements to a flight computer for the purpose of the flight control.

2. The system according to claim 1,
wherein the exoskeleton arms (7) comprise respective position sensors for determining and transmitting to the computing unit (3) a respective current value for each of its kinematic degrees of freedom, wherein the computing unit (3) is designed to determine a position of a respective reference point predefined in the region of the respective distal end of the exoskeleton arm (7) in relation to the cockpit by means of the values of the degrees of freedom, and to control the virtualisation unit (5) for displaying virtual cockpit control elements comprising a control element for the manual control of the momentum dynamics of a real or simulated aircraft (1) associated with the cockpit and a control element for the manual setting of a thrust lever position for the operator, in such a way that a current position of the control element for the manual setting of the thrust lever position correlates with the position of the predefined reference point of a exoskeleton arm (7) and that a current position of the control element for the manual control of the momentum dynamics correlates with the position of the predefined reference point at the other exoskeleton arm (7), and wherein the computing unit (3) is designed to transmit the respective current desired position of the virtual control elements or the respective position of the reference points to the flight computer for the purpose of the flight control.

3. The system according to claim 2,
wherein the computing unit (3) is designed to monitor the positions of the reference points relative to the cockpit to determine whether they move away from at least a predefined region in each case around the virtually represented control elements, so that the operator can operate virtually represented operating elements for the control of subsystems of the aircraft (1) by moving his hand and jointly moving the respective exoskeleton arm (7) and that of the virtually represented control elements remains in its current position when the operator moves his arm located in one of the exoskeleton arms (7) onto a cockpit operating element represented virtually by the visualisation unit (5) with predefined spatial coordinates relative to the cockpit.

4. The system according to any one of the preceding claims,
further comprising two gloves for the operator, wherein the two gloves are each designed for the emission of haptic and/or tactile feedback, wherein the two gloves are connected in a data-exchange manner to the computing unit (3) and the computing unit (3) is designed to control the glove with the virtually operating hand of the operator for the emission of haptic and/or tactile feedback when one of the virtually represented operating elements is operated by the operator.

5. The system according to any one of the preceding claims,
wherein each of the exoskeleton arms (7) comprises actuators, which are connected in a data-exchange manner to the computing unit (3), wherein the computing unit (3) is designed to control the actuators in such a way that each of the exoskeleton arms (7) generates an artificial resistance when the respective position of a given one of the virtually represented control elements is displaced by the operator.

6. The system according to claim 5,
further comprising an input unit, which is connected in data-exchange manner to the computing unit (3), wherein the computing unit (3) is designed, dependent on the input at the input unit, to position the control elements as a whole in their virtual representation corresponding virtually relative to the cockpit and to predefine kinematic properties, according to which the actuators of the exoskeleton arms (7) are actuated to generate the artificial resistance from the computing unit (3).

7. The system according to claims 6,
wherein the input unit is designed to predefine an explicit selection for a left-handed arrangement and a right-handed arrangement of the control elements and wherein the computing unit (3) is designed, depending on the input at the input unit and on the current representation of the virtual control elements according to the selection of the operator, to mirror or retain the positions of the virtual control elements relative to the cockpit with respect to a longitudinal axis of the aircraft (1).

8. The system according to any one of claims 5 to 7,
wherein the computing unit (3) is designed to control the actuators of the respective exoskeleton arm (7), in such a way that, along predefined degrees of freedom of a respective virtual control element, the operator experiences a resistance which is variable during the flight within predefined limits depending on the aircraft state or a reaction to an input of the operator.

9. An aircraft (1) with a system according to any one of the preceding claims.

10. The aircraft (1) according to claim 9,
wherein the exoskeleton arms (7) are each mounted at shoulder height behind an operator's seat on the aircraft structure.

## Revendications

1. Système de commandes de poste de pilotage d'un poste de pilotage d'un aéronef par un opérateur, comportant une unité de calcul (3), une unité de virtualisation (5) et deux bras d'exosquelette (7) avec respectivement une pluralité de degrés de liberté cinématiques et pour loger et poser les bras d'opérateur, sachant que les bras d'exosquelette (7) comportent des actionneurs pour assister l'opérateur face à des accélérations se produisant dans l'aéronef, sachant que l'unité de calcul (3) est réalisée pour déterminer des positions souhaitées des éléments de commande virtuels du poste de pilotage en fonction de la position respectivement actuelle des bras d'exosquelette (7) et afficher à l'opérateur l'unité de virtualisation (5) pour afficher les éléments de commande virtuels dans leurs positions souhaitées ainsi que transmettre à un calculateur de vol à des fins de contrôle de vol des informations sur la position respectivement actuelle des bras d'exosquelette (7) et/ou sur les positions souhaitées des éléments de commande virtuels.

2. Système selon la revendication 1,
sachant que les bras d'exosquelette (7) comportent des capteurs de positions respectifs pour déterminer et transmettre à l'unité de calcul (3) une valeur actuelle respective pour chacun de leurs degrés de liberté cinématiques, sachant que l'unité de calcul (3) est réalisée pour déterminer au moyen de valeurs pour les degrés de liberté, une position d'un point de référence respectif prédéfini dans une zone de l'extrémité distale respective des bras d'exosquelette (7) en rapport avec le poste de pilotage et activer l'unité de virtualisation (5) pour afficher les éléments de commande virtuels du poste de pilotage comprenant un élément de commande pour la commande manuelle de la dynamique des moments d'un aéronef (1) réel ou simulé correspondant au poste de pilotage et un élément de commande pour le réglage manuel d'une position de la manette des gaz pour l'opérateur de telle manière qu'une position actuelle de l'élément de commande pour le réglage manuel de la position de la manette des gaz est en corrélation avec la position du point de référence prédéfini d'un bras d'exosquelette (7) et qu'une position actuelle de l'élément de commande pour la commande manuelle de la dynamique des moments est en corrélation avec la position du point de référence prédéfini sur l'autre bras d'exosquelette (7) et sachant que l'unité de calcul (3) est réalisée pour transmettre à un calculateur de vol à des fins de contrôle de vol la position respective actuellement souhaitée des éléments de commande virtuels ou la position respective des points de référence.

3. Système selon la revendication 2,
sachant que l'unité de calcul (3) est réalisée pour ensuite surveiller les positions des points de référence par rapport au poste de pilotage et voir si elles s'éloignent au moins d'une zone prédéfinie respectivement autour des éléments de commande virtuellement représentés de sorte que l'opérateur peut manipuler les éléments de commande virtuels représentés pour activer des sous-systèmes de l'aéronef (1) en guidant sa main et en guidant avec le bras d'exosquelette (7) respectif et que l'élément de commande des éléments de commande virtuellement représentés reste dans sa position actuelle, lorsque l'opérateur déplace son bras logé dans un des bras d'exosquelette (7) avec les coordonnées spatiales prédéfinies par rapport au poste de pilotage sur un élément de commande virtuellement représenté par l'unité de virtualisation (5).

4. Système selon l'une quelconque des revendications précédentes,
comportant en plus deux gants pour l'opérateur, sachant que les deux gants sont réalisés respectivement pour fournir une rétroaction haptique et/ou tactile, sachant que les deux gants sont reliés techniquement du point de vue données à l'unité de calcul (3) et l'unité de calcul (3) est réalisée pour activer, lors de la manipulation d'un des éléments de commande virtuels par l'opérateur, le gant avec la main virtuellement manipulante de l'opérateur pour fournir une rétroaction haptique et/ou tactile.

5. Système selon l'une quelconque des revendications précédentes,
sachant que chacun des bras d'exosquelette (7) comporte des actionneurs, lesquels sont techniquement reliés du point de vue données à l'unité de calcul (3), sachant que l'unité de calcul (3) est réalisée pour activer les actionneurs de telle sorte que chacun des bras d'exosquelette (7) produit une résistance artificielle lors du déplacement par l'opérateur de la position respective d'un élément respectif des éléments de commande virtuellement représentés.

6. Système selon la revendication 5,
comportant en plus une unité d'entrée, qui est techniquement reliée du point de vue données à l'unité de calcul (3), sachant que l'unité de calcul (3) est réalisée pour positionner en conséquence virtuellement par rapport au poste de pilotage les éléments de commande en tant qu'ensemble dans leur représentation virtuelle en fonction de l'entrée dans l'unité d'entrée et prédéfinir les propriétés cinématiques selon lesquelles les actionneurs des bras d'exosquelette (7) sont activés par l'unité de calcul (3) pour produire la résistance artificielle.

7. Système selon la revendication 6,
sachant que l'unité d'entrée est réalisée pour prédéfinir un choix explicite pour l'agencement de gaucher et l'agencement de droitier des éléments de commande et sachant que l'unité de calcul (3) est réalisée pour refléter ou conserver les positions des éléments de commande virtuels par rapport au poste de pilotage selon un axe longitudinal de l'aéronef (1) en fonction de l'entrée sur l'unité d'entrée et de la représentation actuelle des éléments de commande virtuels conformément au choix de l'utilisateur.

8. Système selon l'une quelconque des revendications 5 à 7,
sachant que l'unité de calcul (3) est réalisée pour activer les actionneurs du bras d'exosquelette respectif (7) de telle manière que le long des degrés de liberté prédéfinis d'un élément de commande virtuel respectif, l'opérateur éprouve une résistance, laquelle est variable pendant le vol à l'intérieur de limites prédéfinies en fonction de l'état de l'aéronef ou en réaction à une entrée de l'opérateur.

9. Aéronef (1) avec un système selon l'une quelconque des revendications précédentes.

10. Aéronef (1) selon la revendication 9,
sachant que les bras d'exosquelette (7) sont logés respectivement à hauteur d'épaule derrière un siège d'opérateur sur la structure d'aéronef.
